(19) Europäisches Patentamt
European Patent Office
Office européen des brevets

(11) EP 3 164 442 B1

(12) # EUROPÄISCHE PATENTSCHRIFT

(45) Veröffentlichungstag und Bekanntmachung des Hinweises auf die Patenterteilung:
**29.08.2018 Patentblatt 2018/35**

(21) Anmeldenummer: **15732696.8**

(22) Anmeldetag: **30.06.2015**

(51) Int Cl.:
***C08G 64/34*** (2006.01) ***C08G 65/26*** (2006.01)

(86) Internationale Anmeldenummer:
**PCT/EP2015/064808**

(87) Internationale Veröffentlichungsnummer:
**WO 2016/001206 (07.01.2016 Gazette 2016/01)**

(54) **VERFAHREN ZUR HERSTELLUNG VON POLYETHERCARBONATPOLYOLEN**

METHOD FOR MANUFACTURING POLYETHER CARBONATE POLYOLS

PROCÉDÉ DESTINÉ À LA FABRICATION DE POLYÉTHERCARBONATPOLYOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2014 EP 14175607**

(43) Veröffentlichungstag der Anmeldung:
**10.05.2017 Patentblatt 2017/19**

(73) Patentinhaber: **Covestro Deutschland AG**
**51373 Leverkusen (DE)**

(72) Erfinder:
- **HOFMANN, Jörg**
  **47800 Krefeld (DE)**
- **BRAUN, Stefanie**
  **51069 Köln (DE)**
- **LAEMMERHOLD, Kai**
  **52078 Aachen (DE)**
- **WOLF, Aurel**
  **42489 Wülfrath (DE)**
- **TRAVING, Michael**
  **51399 Burscheid (DE)**

(74) Vertreter: **Levpat**
**c/o Covestro AG**
**Gebäude 4825**
**51365 Leverkusen (DE)**

(56) Entgegenhaltungen:
**EP-A1- 1 942 126** **EP-A1- 2 703 426**
**WO-A1-2008/092767**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 164 442 B1

## Beschreibung

Die vorliegende Erfindung betrifft ein Verfahren zur Herstellung von Polyethercarbonatpolyolen durch katalytische Copolymerisation von Kohlendioxid ($CO_2$) mit Alkylenoxiden in Gegenwart einer oder mehrerer H-funktioneller Startersubstanzen.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

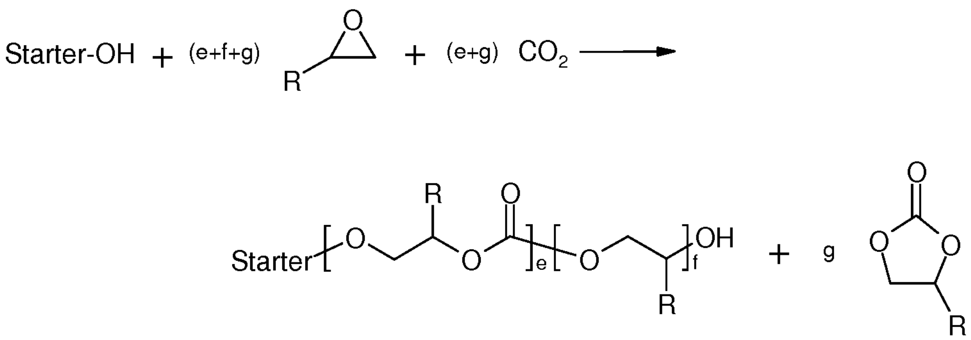

(I)

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 für den Aktivierungsschritt in den Beispielen 1 bis 7 angegebene Menge von 60 Gew.-% Alkylenoxidverbindung relativ zur H-funktionellen Starterverbindung ist hoch und hat den Nachteil, dass dies für großtechnische Anwendungen aufgrund der hohen Exothermie der Homo-Polymerisation von Alkylenoxidverbindungen ein gewisses Sicherheitsrisiko darstellt.

WO-A 2008/092767 offenbart ein Verfahren zur Herstellung von Polyethercarbonatpolyolen, dadurch gekennzeichnet, dass eine oder mehrere H-funktionelle Startersubstanzen im Reaktor vorgelegt werden und dass eine oder mehrere H-funktionelle Startersubstanzen während der Reaktion kontinuierlich in den Reaktor zudosiert werden. In den Beispielen offenbart WO-A 2008/092767 ein Verfahren (im Sinne der vorliegenden Erfindung ein CAOS semibatch-Verfahren), in dem H-funktionelle Startersubstanz und DMC-Katalysator vorgelegt werden, und unter $CO_2$-Atmosphäre Propylenoxid und H-funktionelle Startsubstanz mit Unterbrechung zudosiert werden, wobei die Zugabe von Propylenoxid und H-funktioneller Startsubstanz gestartet wird bei einem Gehalt an freiem Propylenoxid von kleiner 3 Gew.-%, und wobei die Zugabe dieser Substanzen gestoppt wird bei einen Gehalt an freiem Propylenoxid von 8 Gew.-%.

EP 2 703 426 A1 beschreibt ein Verfahren zur Herstellung von Polyethercarbonatpolyolen, dadurch gekennzeichnet, dass ein Suspensionsmittel, welches keine H-funktionellen Gruppen enthält, in einem Reaktor vorgelegt wird, eine oder mehrere H-funktionelle Startersubstanz(en) während der Reaktion kontinuierlich zudosiert werden und das resultierende Reaktionsgemisch kontinuierlich aus dem Reaktor entfernt wird.

Es war daher Aufgabe der vorliegenden Erfindung, ein Verfahren zur Herstellung von Polyethercarbonatpolyolen bereitzustellen, wobei ein hoher $CO_2$-Einbau ins Polyethercarbonatpolyol und eine günstige Selektivität (d.h. niedriges Verhältnis von cyclischem Carbonat zu linearem polymer gebundenen Carbonat) erreicht wird und eine stabile Prozessführung bei der Copolymerisation ermöglicht wird (d.h. keine starken Druck- und/oder Temperaturschwankungen im Reaktionsgemisch der Copolymerisation).

Überraschend wurde gefunden, dass die erfindungsgemäße Aufgabe gelöst wird durch ein Verfahren zur Herstellung von Polyethercarbonatpolyolen durch Anlagerung von Alkylenoxiden und Kohlendioxid an eine oder mehrere H-funktionelle Startersubstanzen in Gegenwart eines Doppelmetallcyanid (DMC)-Katalysators, dadurch gekennzeichnet, dass

(α) gegebenenfalls eine Teilmenge der H-funktionellen Startersubstanzen und/oder ein Suspensionsmittel, das keine H-funktionellen Gruppen enthält, in einem Reaktor jeweils gegebenenfalls gemeinsam mit DMC-Katalysator vorgelegt wird,

(β) gegebenenfalls zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird, und

(γ) eine oder mehrere H-funktionelle Startersubstanzen sowie DMC-Katalysator während der Anlagerung kontinuierlich in den Reaktor zudosiert werden, und die freie Alkylenoxidkonzentration während der Anlagerung von 1,5 bis 5,0 Gew.-%, bevorzugt von 1,5 bis 4,5 Gew.-%, besonders bevorzugt von 2,0 bis 4,0 Gew.-% beträgt (Copolymerisation), und das resultierende Reaktionsgemisch kontinuierlich aus dem Reaktor abgeführt wird.

Zu Schritt (α):

Bei dem erfindungsgemäßen Verfahren kann zunächst eine Teilmenge der H-funktionellen Startersubstanzen und/oder ein Suspensionsmittel, das keine H-funktionellen Gruppen enthält, im Reaktor vorgelegt werden. Anschließend wird die für die Polyaddition benötigte Menge an DMC-Katalysator, der bevorzugt nicht aktiviert ist, in den Reaktor gegeben. Die Reihenfolge der Zugabe ist dabei nicht entscheidend. Es kann auch erst der DMC-Katalysator und anschließend das Suspensionsmittel in den Reaktor gefüllt werden. Alternativ kann auch erst der DMC-Katalysator in dem inerten Suspensionsmittel suspendiert und anschließend die Suspension in den Reaktor gefüllt werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Die gegebenenfalls in Schritt (α) eingesetzte Teilmenge der H-funktionellen Startersubstanz(en) kann Komponente K enthalten, beispielsweise in einer Menge von mindestens 100 ppm, bevorzugt von 100 bis 10000 ppm.

Die erfindungsgemäß eingesetzten Suspensionsmittel enthalten keine H-funktionellen Gruppen. Als Suspensionsmittel sind alle polar-aprotischen, schwach polar-aprotischen und unpolaraprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B. Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Als erfindungsgemäß eingesetzte Suspensionsmittel sind ebenfalls geeignet aliphatische Lactone, aromatische Lactone, Lactide, cyclische Carbonate mit mindestens drei gegebenenfalls substituierten Methylengruppen zwischen den Sauerstoffatomen der Carbonatgruppe, aliphatische cyclische Anhydride und aromatischen cyclische Anhydride.

Aliphatische oder aromatische Lactone in Sinne der Erfindung sind cyclische Verbindungen enthaltend eine Esterbindung im Ring, vorzugsweise

4-gliedrige Ringlactone wie β-Propiolacton, β-Butyrolacton, β-Isovalerolacton, β-Caprolacton, β-Isocaprolacton, β-Methyl-β-valerolacton,

5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on,

6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on,

7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, höhergliedrige Ringlactone, wie (7*E*)-Oxacycloheptadec-7-en-2-on. Besonders bevorzugt ist ε-Caprolacton und Dihydrocumarin.

Lactide in Sinne der Erfindung sind cyclische Verbindungen enthaltend zwei oder mehr Esterbindungen im Ring, vorzugsweise Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Cyclische Carbonate mit mindestens drei gegebenenfalls substituierten Methylengruppen zwischen den Sauerstoffatomen der Carbonatgruppe sind vorzugsweise Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Anhydride sind vorzugsweise Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Als Suspensionsmittel kann auch eine Mischung aus zwei oder mehreren der genannten Suspensionsmittel eingesetzt werden. Höchst bevorzugt wird in Schritt (α) als Suspensionsmittel mindestens eine Verbindung ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Tetrachlorkohlenstoff, ε-Caprolacton, Dihydrocumarin, Trimethylencarbonat, Neopentylglykolcarbonat, 3,6-Dimethyl-1,4-dioxane-2,5-dion, Succinsäure¬anhydrid, Maleinsäureanhydrid und Phthalsäureanhydrid eingesetzt.

In einer Ausführungsform der Erfindung wird in Schritt (α) ein Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im Reaktor vorgelegt. Alternativ können auch in Schritt (α) ein Suspensionsmittel, das keine H-funktionellen Gruppen enthält, und zusätzlich eine Teilmenge der H-funktionellen Startersubstanzen sowie gegebenenfalls DMC-Katalysator im Reaktor vorgelegt werden.

Der DMC-Katalysator wird vorzugsweise in einer Menge eingesetzt, so dass der Gehalt an DMC-Katalysator im resultierenden Reaktionsprodukt 10 bis 10000 ppm, besonders bevorzugt 20 bis 5000 ppm und höchst bevorzugt 50 bis 500 ppm beträgt

In einer bevorzugten Ausführungsform wird in das resultierende Gemisch (i) aus einer Teilmenge der H-funktionellen Startersubstanzen und/oder Suspensionsmittel und (ii) DMC-Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch (i) aus einer Teilmenge der H-funktionellen Startersubstanzen und/oder Suspensionsmittel und (ii) DMC-Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt (α)

(α-I) eine Teilmenge der H-funktionellen Startersubstanzen und/oder Suspensionsmittel vorgelegt und

(α-II) die Temperatur der Teilmenge der H-funktionellen Startersubstanzen und/oder des Suspensionsmittels auf 50 bis 200°C, bevorzugt 80 bis 160°C, besonders bevorzugt 100 bis 140°C gebracht und/oder der Druck im Reaktor

auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zur Teilmenge der H-funktionellen Startersubstanzen und/oder Suspensionsmittel in Schritt (α-I) oder unmittelbar anschließend in Schritt (α-II) zugesetzt wird, und
wobei das Suspensionsmittel keine H-funktionellen Gruppen enthält.

Zu Schritt (β):

Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von $CO_2$, zum DMC-Katalysator bis zum Auftreten der Wärmeentwicklung. Gegebenenfalls kann die Teilmenge des Alkylenoxids in mehreren Einzelschritten, gegebenenfalls in Gegenwart von $CO_2$, zum DMC-Katalysator gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von $CO_2$, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der H-funktionellen Starterverbindung bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Das Alkylenoxid kann in einem Schritt oder portionsweise in mehreren Teilmengen zugegeben werden. Bevorzugt wird nach Zugabe einer Teilmenge des Alkylenoxids die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre erfolgt und
(β2) in einer zweiten Aktivierungsstufe die Zugabe einer zweiten Teilmenge von Alkylenoxid unter Kohlendioxid-Atmosphäre erfolgt.

Zu Schritt (γ):

Die Dosierung einer oder mehrerer H-funktioneller Startersubstanzen, eines oder mehrerer Alkylenoxide und gegebenenfalls auch des Kohlendioxids in den Reaktor erfolgt erfindungsgemäß kontinuierlich. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen. Gegebenenfalls enthalten die in Schritt (γ) eingesetzten H-funktionellen Startersubstanzen mindestens 1000 ppm Komponente K.
Es ist möglich, während der Zugabe des Alkylenoxids und/oder der H-funktionellen Startersubstanzen den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxide und/oder der einen oder mehreren H-funktionellen Startersubstanzen erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide bzw. der H-funktionellen Startersubstanzen kann simultan oder sequentiell über jeweils separate Dosierungen (Zugaben) erfolgen oder über eine oder mehrere Dosierungen, wobei die Alkylenoxide bzw. die H-funktionellen Startersubstanzen einzeln oder als Gemisch dosiert werden können.
Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder portionsweise zuzuführen. Die Menge des Kohlendioxids (angegeben als Druck) kann bei der Zugabe der Alkylenoxide variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.
Eine bevorzugte Ausführungsform des erfindungsgemäßen Verfahrens ist unter anderem dadurch gekennzeichnet, dass in Schritt (γ) die Gesamtmenge der einen oder mehreren H-funktionellen Startersubstanzen zugegeben wird. Diese Zugabe kann mit einer konstanten Dosierrate, mit einer variierenden Dosierrate oder portionsweise erfolgen.
Für das erfindungsgemäße Verfahren hat sich weiterhin gezeigt, dass die Copolymerisation (Schritt (γ)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im allgemeinen sehr langsam. Bei Temperaturen oberhalb von 150°C steigt die Menge an unerwünschten Nebenprodukten stark an.
Die Dosierung des Alkylenoxids, der H-funktionellen Starterverbindung und des DMC-Katalysators kann über separate oder gemeinsame Dosierstellen erfolgen. In einer bevorzugten Ausführungsform werden das Alkylenoxid und die H-funktionelle Starterverbindung über separate Dosierstellen kontinuierlich dem Reaktionsgemisch zugeführt. Diese Zugabe der einen oder mehreren H-funktionellen Startersubstanzen kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel und Schlaufenreaktoren. Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Bei der erfindungsgemäßen kontinuierlichen Reaktionsführung, bei der das resultierende Reaktionsgemisch kontinuierlich aus dem Reaktor entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren.

Die Konzentration an freien Alkylenoxiden in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung).

Die freie Alkylenoxidkonzentration in der Reaktionsmischung während der Anlagerung (Schritt y) beträgt erfindungsgemäß von 1,5 bis 5,0 Gew.-%, bevorzugt 1,5 bis 4,5 Gew.-%, besonders bevorzugt 2,0 bis 4,0 Gew.-% (jeweils bezogen auf das Gewicht der Reaktionsmischung). Dabei wurde überraschend festgestellt, dass im erfindungsgemäßen Bereich der freien Alkylenoxidkonzentration in der Copolymerisation ein hoher $CO_2$-Einbau ins Polyethercarbonatpolyol und eine günstige Selektivität (d.h. niedriges Verhältnis von cyclischem Carbonat zu linearem polymer gebundenen Carbonat) erreicht wird bei gleichzeitig stabiler Prozessführung bei der Copolymerisation (d.h. keine starken Druck- und/oder Temperaturschwankungen im Reaktionsgemisch der Copolymerisation). Erfolgt dagegen die Copolymerisation unterhalb des erfindungsgemäßen Bereichs der freien Alkylenoxidkonzentration, so wird eine ungünstigere Selektivität (d.h. höheres Verhältnis von cyclischem Carbonat zu linearem polymer gebundenen Carbonat) festgestellt. Andererseits wird die Prozessführung bei der Copolymerisation instabil aufgrund von stärkeren Druck- und/oder Temperaturschwankungen im Reaktionsgemisch der Copolymerisation, wenn die freie Alkylenoxidkonzentration in der Copolymerisation oberhalb des erfindungsgemäßen Bereichs liegt.

Erfindungsgemäß werden die Polyethercarbonatpolyole in einem kontinuierlichen Verfahren hergestellt, das sowohl eine kontinuierliche Copolymerisation als auch eine kontinuierliche Zugabe der einen oder mehreren H-funktionellen Startersubstanzen umfasst.
Bevorzugter Gegenstand der Erfindung ist auch ein Verfahren, wobei in Schritt (γ) eine oder mehrere H-funktionelle Startersubstanzen enthaltend mindestens 1000 ppm Komponente K, ein oder mehrere Alkylenoxide sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator in H-funktioneller Starterverbindung suspendiert kontinuierlich zugegeben.

Beispielsweise wird für das kontinuierliche Verfahren zur Herstellung der Polyethercarbonatpolyole gemäß den Schritten (α) und (β) eine aktivierte DMC-Katalysatorenthaltende Mischung hergestellt, dann werden gemäß Schritt (γ)

(γ1) jeweils eine Teilmenge an einer oder mehreren H-funktionelle Startersubstanzen, einem oder mehreren Alkylenoxiden und Kohlendioxid zudosiert zum Initiieren der Copolymerisation, und

(γ2) während des Fortschreitens der Copolymerisation jeweils die verbleibende Menge an DMC-Katalysator, einer oder mehreren Startersubstanzen und Alkylenoxiden in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Starterverbindung zugegeben, wobei die Menge vorzugsweise so gewählt ist, dass der Gehalt an DMC-Katalysator im resultierenden Reaktionsprodukt 10 bis 10000 ppm, besonders bevorzugt 20 bis 5000 ppm und höchst bevorzugt 50 bis 500 ppm beträgt.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Es ist auch gefunden worden, dass das Verfahren der vorliegenden Erfindung zur Herstellung großer Mengen des Polyethercarbonatpolyolprodukts verwendet werden kann, wobei anfänglich ein gemäß den Schritten (α) und (β) in einer Teilmenge der H-funktionellen Startersubstanzen und/oder in Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" Katalysator als nicht aktivierter DMC-Katalysator in fester Form oder in Form einer Aufschlämmung in einer Startersubstanz oder Suspensionsmittel definiert. Die Fähigkeit des vorliegenden Verfahrens zur Verwendung von frischem, nicht aktiviertem DMC-Katalysator im Schritt (γ) ermöglicht signifikante Einsparungen bei der kommerziellen Herstellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Schritt (δ)

Optional kann in einem Schritt (δ) das in Schritt (γ) kontinuierlich entfernte Reaktionsgemisch in einen Nachreaktor überführt werden, in dem im Wege einer Nachreaktion der Gehalt an freiem Alkylenoxid auf weniger als 0,05 Gew.-% im Reaktionsgemisch reduziert wird. Als Nachreaktor kann beispielsweise ein Rohrreaktor, ein Schlaufenreaktor oder ein Rührkessel dienen.
Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Die erfindungsgemäß erhaltenen Polyethercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Alkylenoxide

Allgemein können für das erfindungsgemäße Verfahren **Alkylenoxide** (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan. Vorzugsweise werden als Alkylenoxide Ethylenoxid und/oder Propylenoxid, insbesondere Propylenoxid eingesetzt.

H-funktionelle Startersubstanz

Als geeignete **H-funktionelle Startersubstanz** ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-l-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise

Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionellen Startersubstanzen können auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mn im Bereich von 150 bis 8000 g/mol bei einer Funktionalität von 2 bis 3 und Polyetherpolyole mit einem Molekulargewicht Mn im Bereich von 150 bis 8000 g/mol und einer Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Startersubstanz verstanden.

Bevorzugt enthalten die eine oder mehrere H-funktionelle Startersubstanzen, die während der Reaktion kontinuierlich in den Reaktor zudosiert werden, mindestens 1000 ppm, besonders bevorzugt 1000 ppm bis 10000 ppm Komponente K.

<u>DMC-Katalysatoren</u>

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt gegebenenfalls nicht mehr erforderlich ist. Als DMC-Katalysator wird beispielsweise ein Metallkomplexkatalysator auf Basis der Metalle Zink und Cobalt eingesetzt. Beispielsweise enthalten hochaktive DMC-Katalysatoren eine Doppelmetallcyanid-Verbindung (z.B. Zinkhexacyanocobaltat(III)), einen organischen Komplexliganden (z.B. tert.-Butanol) und Polyetherpolyol mit einem zahlenmittlerem Molekulargewicht größer als 500 g/mol; solche DMC-Katalysatoren sind beispielsweise in EP-A 700 949 beschrieben.

Geeignete DMC-Katalysatoren werden vorzugsweise erhalten, indem man

(i) im ersten Schritt eine wässrige Lösung eines Metallsalzes mit der wässrigen Lösung eines Metallcyanidsalzes

in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den DMC-Katalysatoren enthaltenen Doppelmetallcyanid-Verbindungen sind die Reaktionsprodukte wasserlöslicher Metallsalze und wasserlöslicher Metallcyanidsalze. Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

$$M(X)_n \qquad (II)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (III),

$$M_r(X)_3 \qquad (III)$$

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M(X)_s \qquad (IV)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_t \qquad (V)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

$$(Y)_a M'(CN)_b (A)_c \qquad (VI)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den DMC-Katalysatoren enthalten sind, sind Verbindungen der allgemeinen Formel (VII)

$$M_x[M'_{x'},(CN)_y]_z \qquad (VII)$$

worin M wie in Formel (II) bis (V) und
M' wie in Formel (VI) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanid-Verbindungen sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700

949, EP-A 761 708, JP 4 145 123, US 5 470 813, EP-A 743 093 und WO-A 97/40086 offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus organischen Komplexliganden und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284), sogenannte Cobalt-Salen-Katalysatoren (beschrieben z.B. in US 7,304,172 B2, US 2012/0165549 A1) und bimetallische Zink-Komplexe mit makrozyklischen Liganden (beschrieben z.B. in M. R. Kember et al., Angew. Chem., Int. Ed., 2009, 48, 931).

<u>Komponente K</u>

Als Komponente K geeignete Verbindungen sind dadurch gekennzeichnet, dass sie mindestens eine Phosphor-Sauerstoff-Bindung enthalten. Als Komponente K geeignet sind beispielsweise Phosphorsäure sowie Phosphorsäuresalze, Phosporsäurehalogenide, Phosphorsäureamide, Phosphorsäureester und Salze der Mono- und Diester der Phosphorsäure.
Unter den unter Komponente K zuvor und nachfolgend genannten Estern werden im Sinne der Erfindung jeweils die Alkylester, Arylester und/oder Alkarylester-Derivate verstanden.

Als Phosphorsäureester sind beispielsweise geeignet Mono-, Di- oder Triester von Phosphorsäure, Mono-, Di-, Tri- oder Tetraester von Pyrophosphorsäure und Mono-, Di-, Tri-, Tetra- oder Polyester von Polyphosphorsäure und Alkoholen mit 1 bis 30 C-Atomen. Als Komponente K sind beispielsweise die folgenden Verbindungen geeignet: Phosphorsäuretriethylester, Phosphorsäurediethylester, Phosphorsäuremonoethylester, Phosphorsäuretripropylester, Phosphorsäuredipropylester, Phosphorsäuremonopropylester, Phosphorsäuretributylester, Phosphorsäuredibutylester, Phosphorsäuremonobutylester, Phosphorsäuretrioctylester, Phosphorsäuretris(2-ethylhexyl)ester, Phosphorsäuretris-(2-butoxyethyl)ester, Phosphorsäurediphenylester, Phosphorsäuredikresylester, Fructose-1,6-bisphosphat, Glucose-1-phosphat, Phosphorsäure-bis-(dimethylamid)-chlorid, Phosphorsäure-bis-(4-nitrophenyl)-ester, Phosphorsäurecyclopropylmethyl-diethyl-ester, Phosphorsäure-dibenzylester, Phosphorsäure-diethyl-3-butenylester, Phosphorsäuredihexadecylester, Phosphorsäure-diisopropylester-chlorid, Phosphorsäure-diphenylester, Phosphorsäure-diphenylester-chlorid, Phosphorsäure-2-hydroxyethylmethacrylatester, Phosphorsäure-mono-(4-chlorphenylester)-dichlorid, Phosphorsäure-mono-(4-nitrophenylester)-dichlorid, Phosphorsäure-monophenylester-dichlorid, Phosphorsäure-tridecylester, Phosphorsäure-trikresylester, Phosphorsäure-trimethylester, Phosphorsäure-triphenylester, Phosphorsäuretripyrolidid, Phosphorsulfochlorid, Phosphorsäuredichlorid-dimethylamid, Phosphorsäuredichlorid-methylester, Phosphorylbromid, Phosphorylchlorid, Phosphorylchinolinchlorid Calciumsalz und O-Phosphorylethanolamin, Alkali- und Ammoniumdihydrogenphosphate, Alkali-, Erdalkali- und Ammoniumhydrogenphosphate, Alkali-, Erdalkali- und Ammoniumphosphate.

Unter Ester der Phosphorsäure (Phosphorsäureester) werden auch die durch Propoxylierung der Phosphorsäure erhältlichen Produkte verstanden (bspw. erhältlich als Exolit® OP 560).

Als Komponente K geeignet sind auch Phosphonsäure und Phosphorige Säure sowie Mono- und Diester der Phosphonsäure sowie Mono-, Di- und Triester der Phosphorigen Säure sowie jeweils deren Salze, Halogenide und Amide.

Als Phosphonsäureester sind beispielsweise geeignet Mono- oder Diester von Phosphonsäure, Alkylphosphonsäuren, Arylphosphonsäuren, Alkoxycarbonylalkylphosphonsäuren, Alkoxycarbonylphosphonsäuren, Cyanalkylphosphonsäuren und Cyanphosphonsäuren oder Mono-, Di-, Tri- oder Tetraester von Alkyldiphosphonsäuren und Alkoholen mit 1 bis 30 C-Atomen. Als Phosphorigsäureester sind beispielsweise geeignet Mono-, Di- oder Triester der Phosphorigen Säure und Alkoholen mit 1 bis 30 C-Atomen. Das beinhaltet beispielsweise Phenylphosphonsäure, Butylphosphonsäure, Dodecylphosphonsäure, Ethylhexylphosphonsäure, Octylphosphonsäure, Ethylphosphonsäure, Methylphosphonsäure, Octadecylphosphonsäure sowie deren Mono- und Dimethylester, -ethylester, -butylester, -ethylhexylester oder -phenylester, Butylphosphonsäuredibutylester, Phenylphosphonsäuredioctylester, Phosphonoameisensäuretriethylester, Phosphonoessigsäuretrimethylester, Phosphonoessigsäuretriethylester, 2-Phosphonopropionsäuretrimethylester, 2-Phosphonopropionsäuretriethylester, 2-Phosphonopropionsäuretripropylester, 2-Phosphonopropionsäuretributylester, 3-Phosphonopropionsäuretriethylester, 2-Phosphonobuttersäuretriethylester, 4-Phosphonocrotonsäuretriethylester, (12-Phosphonododecyl)-phosphonsäure, Phosphonoessigsäure, Phosphonoessigsäure-P,P-bis-(2,2,2-trifluorethyl)-methylester, Phosphonoessigsäure-P,P-diethyl-trimethylsilylester, Phosphonoessigsäure-P,P-dimethyl-tert.-butylester, Phosphonoessigsäure-P,P-dimethylester Kaliumsalz, Phosphonoessigsäure-P,P-dimethylethylester, 16-Phosphonohexadecansäure, 6-Phosphonohexansäure, N-(Phosphonomethyl)-glycin, N-(Phosphonomethyl)-glycin-monoisopropylaminsalz, N-(Phosphonomethyl)-iminodiessigsäure, (8-Phosphono-octyl)-phosphonsäure, 3-Phosphonopropionsäure, 11-Phosphonoundecansäure, Phosphonsäure-pinakolester, Trilaurylphosphit, Tris-(3-ethyloxethanyl-3-methyl)phosphit, Heptakis(dipropylenglykol)phosphit, Phosphorigsäure-bis-(diisopropylamid)-2-cyanethylester, Phosphorigsäure-bis-(diisopropylamid)-methylester, Phosphorigsäuredibutylester, Phosphorigsäure-(diethylamid)-dibenzylester, Phosphorigsäure-(diethylamid)-ditertiärbutylester, Phosphorigsäure-diethylester, Phosphorigsäure-(diisopropylamind)-diallylester, Phosphorigsäure-(diisopropylamid)-dibenzylester, Phosphorigsäure-(diisopropylamid)-di-tert.-butylester, Phosphorigsäure-(diisopropylamid)-dimethylester, Phosphorigsäure-(dimethylamid)-dibenzylester, Phosphorigsäuredimethylester, Phosphorigsäure-dimethyl-trimethylsilylester, Phosphorigsäure-diphenylester, Phosphorigsäuremethylesterdichlorid, Phosphorigsäure-mono-(2-cyanethylester)-diisopropylamid-chlorid, Phosphorigsäure-(o-phenylenester)-chlorid, Phosphorigsäure-tributylester, Phosphorigsäuretriethylester, Phosphorigsäure-triisopropylester, Phosphorigsäure-triphenylester, Phosphorigsäure-tris-(tert.-butyl-dimethylsilyl)-ester, Phosphorigsäure-(tris-1,1,1,3,3,3-hexafluor-2-propyl)-ester, Phosphorigsäure-tris-(trimethylsilyl)-ester, Phosphorigsäure-dibenzylester. Unter Ester der Phosphorigen Säure werden auch die durch Propoxylierung der Phosphorigen Säure erhältlichen Produkte verstanden (bspw. erhältlich als Exolit® OP 550).

Als Komponente K geeignet sind auch Phosphinsäure, Phosphonigsäure und Phosphinigsäure sowie jeweils deren Ester. Als Phosphinsäureester sind beispielsweise geeignet Ester von Phosphinsäure, Alkylphosphinsäuren, Dialkylphosphinsäuren oder Arylphosphinsäuren und Alkoholen mit 1 bis 30 C-Atomen. Als Phosphonigsäureester sind beispielsweise geeignet Mono- und Diester von Phosphonigsäure oder Arylphosphonigsäure und Alkoholen mit 1 bis 30 C-Atomen. Das beinhaltet beispielsweise Diphenylphosphinsäure oder 9,10-Dihydro-9-Oxa-10-Phosphaphenanthren-10-Oxid.

Die als Komponente K geeigneten Ester der Phosphorsäure, Phosphonsäure, Phosphorigen Säure, Phosphinsäure, Phosphonigsäure oder Phosphinigsäure werden in der Regel durch Umsetzung von Phosphorsäure, Pyrophosphorsäure, Polyphosphorsäuren, Phosphonsäure, Alkylphosphonsäuren, Arylphosphonsäuren, Alkoxycarbonylalkylphosphonsäuren, Alkoxycarbonylphosphonsäuren, Cyanalkylphosphonsäuren, Cyanphosphonsäure, Alkyldiphosphonsäuren, Phosphonigsäure, Phosphorige Säure, Phosphinsäure, Phosphinigsäure oder deren Halogenderivaten oder Phosphoroxiden mit Hydroxyverbindungen mit 1 bis 30 C-Atomen wie Methanol, Ethanol, Propanol, Butanol, Pentanol, Hexanol, Heptanol, Octanol, Nonanol, Dekanol, Dodekanol, Tridekanol, Tetradekanol, Pentadekanol, Hexadekanol, Heptadekanol, Octadekanol, Nonadekanol, Methoxymethanol, Ethoxymethanol, Propoxymethanol, Butoxymethanol, 2-Ethoxyethanol, 2-Propoxyethanol, 2-Butoxyethanol, Phenol, Hydroxyessigsäureethylester, Hydroxyessigsäurepropylester, Hydroxypropionsäureethylester, Hydroxypropionsäurepropylester, 1,2-Ethandiol, 1,2-Propandiol, 1,2,3-Trihydroxypropan, 1,1,1-Trimethylolpropan oder Pentaerythrit erhalten.

Als Komponente K geeignete Phosphinoxide enthalten eine oder mehrere Alkyl-, Aryl oder Aralkylgruppen mit 1 - 30 C-Atomen, die an den Phosphor gebunden sind. Bevorzugte Phosphinoxide haben die allgemeine Formel $R_3P=O$ wobei R eine Alkyl-, Aryl oder Aralkylgruppe mit 1 - 20 C-Atomen ist. Geeignete Phosphinoxide sind beispielsweise Trimethylphosphinoxid, Tri(n-butyl)phosphinoxid, Tri(n-octyl)phosphinoxid, Triphenylphosphinoxid, Methyldibenzylphosphinoxid und deren Mischungen.

Des Weiteren sind als Komponente K geeignet Verbindungen des Phosphors, die durch Reaktion mit OH-funktionellen Verbindungen (wie bspw. Wasser oder Alkoholen) eine oder mehrere P-O-Bindung(en) ausbilden können. Beispielsweise kommen als solche Verbindungen des Phosphors in Frage Phosphor-(V)-sulfid, Phosphortribromid, Phosphortrichlorid und Phosphortriiodid.

Es können auch beliebige Mischungen der vorgenannten Verbindungen als Komponente K eingesetzt werden.

In einer Ausführungsform der Erfindung ist Komponente K ausgewählt aus mindestens einer Verbindung aus der Gruppe bestehend aus Phosphorsäure, Phosphonsäure, Phosphorige Säure, Phosphinsäure, Phosphonigsäure, Phosphinigsäure, Phosphinoxide sowie Salze, Ester, Halogenide und Amide der Phosphorsäure, Phosphonsäure, Phosphorigen Säure, Phosphinsäure, Phosphonigsäure, Phosphinigsäure, Phosphor-(V)-sulfid, Phosphortribromid, Phosphortrichlorid und Phosphortriiodid.

Bevorzugt ist Komponente K ausgewählt aus mindestens einer Verbindung aus der Gruppe bestehend aus

Phosphorsäure,
Mono-, Di- oder Trialkylester der Phosphorsäure,
Mono-, Di- oder Triarylester der Phosphorsäure,
Mono-, Di- oder Trialkarylester der Phosphorsäure,
$(NH_4)_2HPO_4$,
Phosphonsäure,
Mono-, oder Dialkylester der Phosphonsäure,
Mono-, oder Diarylester der Phosphonsäure,
Mono-, oder Dialkarylester der Phosphonsäure,
Phosphorige Säure,
Mono-, Di- oder Trialkylester der Phosphorigen Säure,
Mono-, Di- oder Triarylester der Phosphorigen Säure,

Mono-, Di- oder Trialkarylester der Phosphorigen Säure,
Phosphinsäure,
Phosphonigsäure und
Phosphinigsäure.

Besonders bevorzugt ist Komponente K Phosphorsäure.

Nach der Durchführung des erfindungsgemäßen Verfahrens zur Herstellung des Polyethercarbonatpolyols enthält das resultierende Reaktionsgemisch den DMC-Katalysator in der Regel in Form feiner dispergierter Feststoffpartikel. Daher kann es wünschenswert sein, den DMC-Katalysator möglichst vollständig aus dem resultierenden Reaktionsgemisch zu entfernen. Die Abtrennung des DMC-Katalysators hat einerseits den Vorteil, dass das resultierende Polyethercarbonatpolyol industrie- oder zertifzierungsrelevante Grenzwerte beispielsweise bzgl. Metallgehalten oder bzgl. bei einem Verbleib aktivierten Katalysators im Produkt andernfalls resultierenden Emissionen erfüllt und andererseits dient es der Rückgewinnung des DMC-Katalysators.

Der DMC-Katalysator kann mit Hilfe verschiedener Methoden weitestgehend oder vollständig entfernt werden: Der DMC Katalysator kann zum Beispiel mit Hilfe der Membranfiltration (Nano-, Ultra oder Querstromfiltration), mit Hilfe der Kuchenfiltration, mit Hilfe der Pre-Coat Filtration oder mittels Zentrifugation vom Polyethercarbonatpolyol abgetrennt werden.

Vorzugsweise wird zur Abtrennung des DMC-Katalysators ein mehrstufiges Verfahren bestehend aus mindestens zwei Schritten angewendet.

Beispielsweise wird in einem ersten Schritt das zu filtrierende Reaktionsgemisch in einem ersten Filtrationsschritt in einen größeren Teilstrom (Filtrat), bei dem ein Großteil des Katalysators oder der gesamte Katalysator abgetrennt wurde, und einen kleineren Reststrom (Retentat), der den abgetrennten Katalysator enthält, aufgeteilt. In einem zweiten Schritt wird dann der Reststrom einer Dead-End Filtration unterzogen. Hieraus wird ein weiterer Filtratstrom, bei dem ein Großteil des Katalysators oder der gesamte Katalysator abgetrennt wurde, sowie ein feuchter bis weitestgehend trockener Katalysatorrückstand gewonnen.

Alternativ kann der im Polyethercarbonatpolyol enthaltene Katalysator aber auch in einem ersten Schritt einer Adsorption, Agglomeration/Koagulation und/oder Flokkulation unterzogen werden, auf die in einem zweiten oder mehreren nachfolgenden Schritten die Abtrennung der Feststoffphase von dem Polyethercarbonatpolyol folgt. Geeignete Adsorbentien zur mechanisch-physikalischen und/oder chemischen Adsorption umfassen unter anderem aktivierte oder nichtaktivierte Tonerden bzw. Bleicherden (Sepiolite, Montmorillonite, Talk etc.), synthetische Silikate, Aktivkohle, Kieselerden/Kieselgure und aktivierte Kieselerden/Kieselgure in typischen Mengenbereichen von 0,1 Gew% bis 2 Gew%, bevorzugt 0,8 Gew% bis 1,2 Gew% bezogen auf das Polyethercarbonatpolyol bei Temperaturen von 60°C bis 140°C, bevorzugt 90°C bis 110°C und Verweilzeiten von 20 min bis 100 min, bevorzugt 40 min bis 80 min, wobei der Adsorptionsschritt inklusive des Einmischens des Adsorbens batchweise oder kontinuierlich durchgeführt werden kann.

Ein bevorzugtes Verfahren zur Abtrennung dieser Feststoffphase (bestehend z.B. aus Adsorbens und DMC Katalysator) von dem Polyethercarbonatpolyol stellt die Pre-Coat Filtration dar. Hierbei wird die Filteroberfläche abhängig vom Filtrationsverhalten, welches von Teilchengrößenverteilung der abzutrennenden Feststoffphase, mittlerem spezifischem Widerstand des resultierenden Filterkuchens sowie dem Gesamtwiderstand von Pre-Coat-Schicht und Filterkuchen bestimmt wird, mit einem permeablen/durchlässigen Filtrationshilfsmittel (z.B. anorganisch: Celite, Perlite; organisch: Zellulose) mit einer Schichtdicke von 20 mm bis 250 mm, bevorzugt 100 mm bis 200 mm beschichtet ("Pre-Coat"). Die Abtrennung der Mehrheit der Feststoffphase (bestehend z.B. aus Adsorbens und DMC Katalysator) erfolgt dabei an der Oberfläche der Pre-Coat Schicht in Kombination mit einer Tiefenfiltration der kleineren Teilchen innerhalb der Pre-Coat Schicht. Die Temperatur des zu filtrierenden Rohprodukts liegt dabei im Bereich 50°C bis 120°C, bevorzugt 70°C bis 100°C.

Um einen ausreichenden Produktstrom durch die Pre-Coat Schicht und die darauf aufwachsende Kuchenschicht zu gewährleisten, können die Kuchenschicht sowie ein geringer Teil der Pre-Coat Schicht (periodisch oder kontinuierlich) mittels eines Schabers oder Messers abgetragen und aus dem Prozess entfernt werden. Die Verstellung des Schabers bzw. Messers erfolgt dabei mit minimalen Vorschub-Geschwindigkeiten von ca. 20 µm/min - 500 µm/min, bevorzugt im Bereich 50 µm/min - 150 µm/min.

Sobald die Pre-Coat Schicht durch diesen Prozess weitestgehend oder vollständig abgetragen wurde, wird die Filtration angehalten und eine neue Pre-Coat Schicht auf die Filterfläche aufgezogen. Hierbei kann das Filterhilfsmittel beispielsweise in zyklischem Propylencarbonat suspendiert sein.

Typischerweise wird diese Pre-Coat Filtration in Vakuum-Trommel-Filtern durchgeführt. Um im Fall eines viskosen Feedstroms technisch relevante Filtratdurchsätze im Bereich von 0,1 $m^3/(m^2 \bullet h)$ bis 5 $m^3/(m^2 \bullet h)$ zu realisieren, kann das Trommel-Filter auch als Druck-Trommel-Filter mit Druckdifferenzen von bis zu 6 bar und mehr zwischen dem zu filtrierenden Medium und der Filtratseite ausgeführt werden.

Grundsätzlich kann die Abtrennung des DMC-Katalysators aus dem resultierenden Reaktionsgemisch des erfindungsgemäßen Verfahrens sowohl vor Entfernung von flüchtigen Bestandteilen (wie z.B. zyklischem Propylencarbonat) als

auch nach der Abtrennung von flüchtigen Bestandteilen erfolgen.

Ferner kann die Abtrennung des DMC-Katalysators aus dem resultierenden Reaktionsgemisch des erfindungsgemäßen Verfahrens mit oder ohne den weiteren Zusatz eines Lösungsmittels (insbesondere zyklischem Propylencarbonat) zwecks Absenkung der Viskosität vor oder während der einzelnen, beschriebenen Schritte der Katalysatorabtrennung durchgeführt werden.

In einer ersten Ausführungsform betrifft die Erfindung somit ein Verfahren zur Herstellung von Polyethercarbonatpolyolen durch Anlagerung von Alkylenoxiden und Kohlendioxid an eine oder mehrere H-funktionelle Startersubstanzen in Gegenwart eines Doppelmetallcyanid (DMC)-Katalysators, dadurch gekennzeichnet, dass

(γ) eine oder mehrere H-funktionelle Startersubstanzen sowie DMC-Katalysator während der Anlagerung kontinuierlich in den Reaktor zudosiert werden, und die freie Alkylenoxidkonzentration in der Reaktionsmischung von 1,5 bis 5,0 Gew.-% beträgt, und das resultierende Reaktionsgemisch kontinuierlich aus dem Reaktor abgeführt wird.

In einer zweiten Ausführungsform betrifft die Erfindung ein Verfahren gemäß der ersten Ausführungsform, wobei in Schritt (γ) die freie Alkylenoxidkonzentration während der Anlagerung von 1,5 bis 4,5 Gew.-% beträgt.

In einer dritten Ausführungsform betrifft die Erfindung ein Verfahren gemäß der ersten Ausführungsform, wobei in Schritt (γ) die freie Alkylenoxidkonzentration während der Anlagerung von 2,0 bis 4,0 Gew.-% beträgt.

In einer vierten Ausführungsform betrifft die Erfindung ein Verfahren gemäß einer der Ausführungsformen 1 bis 3, wobei die in Schritt (γ) eingesetzten H-funktionellen Startersubstanzen mindestens 1000 ppm Komponente K enthalten, wobei Komponente K ausgewählt ist aus mindestens einer Verbindung, die eine Phosphor-Sauerstoff-Bindung enthält, oder einer Verbindung des Phosphors, die durch Reaktion mit OH-funktionellen Verbindungen eine oder mehrere P-O-Bindung(en) ausbilden kann.

In einer fünften Ausführungsform betrifft die Erfindung ein Verfahren gemäß der vierten Ausführungsform, wobei die in Schritt (γ) eingesetzten H-funktionellen Startersubstanzen von 1000 ppm bis 10000 ppm Komponente K enthalten.

In einer sechsten Ausführungsform betrifft die Erfindung ein Verfahren gemäß einer der Ausführungsformen 4 oder 5, wobei Komponente K ausgewählt ist aus mindestens einer Verbindung aus der Gruppe bestehend aus Phosphorsäure, Phosphonsäure, Phosphorige Säure, Phosphinsäure, Phosphonigsäure, Phosphinigsäure, Phosphinoxide, Salze der Phosphorsäure, Ester der Phosphorsäure, Halogenide der Phosphorsäure, Amide der Phosphorsäure, Phosphonsäure, Phosphorigen Säure, Phosphinsäure, Phosphonigsäure, Phosphinigsäure, Phosphor-(V)-sulfid, Phosphortribromid, Phosphortrichlorid und Phosphortriiodid.

In einer siebten Ausführungsform betrifft die Erfindung ein Verfahren gemäß einer der Ausführungsformen 4 oder 5, wobei Komponente K ausgewählt ist aus mindestens einer Verbindung aus der Gruppe bestehend aus Phosphorsäure, Mono-, Di- oder Trialkylester der Phosphorsäure, Mono-, Di- oder Triarylester der Phosphorsäure, Mono-, Di- oder Trialkarylester der Phosphorsäure, $(NH_4)_2HPO_4$, Phosphonsäure, Mono-, oder Dialkylester der Phosphonsäure, Mono-, oder Diarylester der Phosphonsäure, Mono-, oder Dialkarylester der Phosphonsäure, Phosphorige Säure, Mono-, Di- oder Trialkylester der Phosphorigen Säure, Mono-, Di- oder Triarylester der Phosphorigen Säure, Mono-, Di- oder Trialkarylester der Phosphorigen Säure, Phosphinsäure, Phosphonigsäure und Phosphinigsäure.

In einer achten Ausführungsform betrifft die Erfindung ein Verfahren gemäß einer der Ausführungsformen 4 oder 5, wobei Komponente K Phosphorsäure ist.

In einer neunten Ausführungsform betrifft die Erfindung ein Verfahren gemäß einer der Ausführungsformen 1 bis 8, wobei vor dem Schritt (γ) in einem Schritt (α) eine Teilmenge der H-funktionellen Startersubstanzen und/oder ein Suspensionsmittel, das keine H-funktionellen Gruppen enthält, in einem Reaktor jeweils gegebenenfalls gemeinsam mit DMC-Katalysator vorgelegt wird.

In einer zehnten Ausführungsform betrifft die Erfindung ein Verfahren gemäß der neunten Ausführungsform, wobei in Schritt (α) mindestens ein Suspensionsmittel eingesetzt wird ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Tetrachlorkohlenstoff, ε-Caprolacton, Dihydrocumarin, Trimethylencarbonat, Neopentylglykolcarbonat, 3,6-Dimethyl-1,4-dioxane-2,5-dion, Succinsäure¬anhydrid, Maleinsäureanhydrid und Phthalsäureanhydrid.

In einer elften Ausführungsform betrifft die Erfindung ein Verfahren gemäß einer der Ausführungsformen 9 oder 10, wobei anschließend an Schritt (α) und vor dem Schritt (γ)

(β) zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird.

In einer zwölften Ausführungsform betrifft die Erfindung ein Verfahren gemäß einer der Ausführungsformen 1 bis 11, wobei (δ) das in Schritt (γ) kontinuierlich entfernte Reaktionsgemisch in einen Nachreaktor überführt wird, in dem im Wege einer Nachreaktion der Gehalt an freiem Alkylenoxid auf weniger als 0,05 Gew.-% im Reaktionsgemisch reduziert wird.

In einer dreizehnten Ausführungsform betrifft die Erfindung ein Verfahren gemäß einer der Ausführungsformen 1 bis 12, wobei die eine oder mehrere H-funktionelle Startersubstanzen ausgewählt sind aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mn im Bereich von 150 bis 8000 g/mol bei einer Funktionalität von 2 bis 3 und Polyetherpolyole mit einem Molekulargewicht Mn im Bereich von 150 bis 8000 g/mol bei einer Funktionalität von 2 bis 3.

In einer vierzehnten Ausführungsform betrifft die Erfindung ein Verfahren gemäß einer der Ausführungsformen 1 bis 13, wobei in Schritt (γ) die eine oder mehrere H-funktionelle Startersubstanzen ausgewählt sind aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan und Pentaerythrit.

In einer fünfzehnten Ausführungsform betrifft die Erfindung ein Verfahren zur Herstellung von Polyethercarbonatpolyolen durch Anlagerung von Alkylenoxiden und Kohlendioxid an eine oder mehrere H-funktionelle Startersubstanzen in Gegenwart eines Metallkomplexkatalysator auf Basis der Metalle Zink und/oder Cobalt, dadurch gekennzeichnet, dass

(γ) eine oder mehrere H-funktionelle Startersubstanzen sowie Metallkomplexkatalysator auf Basis der Metalle Zink und/oder Cobalt während der Anlagerung kontinuierlich in den Reaktor zudosiert werden, und die freie Alkylenoxidkonzentration in der Reaktionsmischung von 1,5 bis 5,0 Gew.-% beträgt, und das resultierende Reaktionsgemisch kontinuierlich aus dem Reaktor abgeführt wird.

Die nach dem erfindungsgemäßen Verfahren erhältlichen Polyethercarbonatpolyole können problemlos verarbeitet werden, insbesondere durch Umsetzung mit Di- und/oder Polyisocyanaten zu Polyurethanen, insbesondere zu Polyurethan-Weichschaumstoffen (wie beispielsweise Polyurethan-Weichblockschaumstoffen und Polyurethan-Weichformschaumstoffen), Polyurethan-Elastomeren, Polyurethan-Thermoplasten, Polyurethan-Hartschaumstoffen, zu Polyurethan basierten Lackrohstoffen und zu Polyurethan-basierten Beschichtungen. Für Polyurethananwendungen werden vorzugsweise Polyethercarbonatpolyole eingesetzt, die auf einer H-funktionellen Startersubstanz basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

Gegenstand der Erfindung ist somit ein Verfahren zur Herstellung von Polyethercarbonatpolyolen durch Anlagerung von Alkylenoxiden und Kohlendioxid an eine oder mehrere H-funktionelle Startersubstanzen in Gegenwart eines Doppelmetallcyanid (DMC)-Katalysators, dadurch gekennzeichnet, dass

(γ) eine oder mehrere H-funktionelle Startersubstanzen sowie DMC-Katalysator während der Anlagerung kontinuierlich in den Reaktor zudosiert werden, und die freie Alkylenoxidkonzentration in der Reaktionsmischung von 1,5 bis 5,0 Gew.-% beträgt, und das resultierende Reaktionsgemisch kontinuierlich aus dem Reaktor abgeführt wird.

Diese Verfahrensführung, bei der eine oder mehrere H-funktionelle Startersubstanzen sowie DMC-Katalysator während der Anlagerung kontinuierlich in den Reaktor zudosiert werden, wird auch als CAOS-conti-Verfahren bezeichnet.

## Beispiele

### Einsatzstoffe:

Als DMC-Katalysator wurde bei allen Beispielen DMC-Katalysator hergestellt gemäß Beispiel 6 in WO 01/80994 A1 eingesetzt.

### Messmethoden:

Experimentell ermittelte OH-Zahlen wurden gemäß der Vorschrift der DIN 53240 bestimmt.

Das Zahlenmittel $M_n$ und das Gewichtsmittel $M_w$ des Molekulargewichts sowie die Polydispersität ($M_w/M_n$) der Produkte wurde mittels Gelpermeationschromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2xPSS SDV linear M, 8x300 mm, 5 μm; RID-Detektor). Dabei wurden Polystyrolproben bekannter Molmasse zur Kalibrierung verwendet.

Der im stationären Zustand resultierende freie PO-Anteil in der Reaktionsmischung während der Copolymerisation wurde mittel online IR Spektroskopie (Fa. Bruker Optik GmbH, Matrix-MF exproof, Methode nach Herstellerangabe, Kalibration Einzelstoffe) ermittelt.

Der Anteil an eingebautem $CO_2$ im resultierenden Polyethercarbonatpolyol ("eingebautes $CO_2$") sowie das Verhältnis von Propylencarbonat zu Polyethercarbonatpolyol wurden mittels $^1$H-NMR (Firma Bruker, DPX 400, 400 MHz; Pulsprogramm zg30, Wartezeit dl: 10s, 64 Scans) bestimmt. Die Probe wurde jeweils in deuteriertem Chloroform gelöst.

Die relevanten Resonanzen im $^1$H-NMR (bezogen auf TMS = 0 ppm) sind wie folgt:
cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm.

Der Molenanteil des im Polymer eingebauten Carbonats in der Reaktionsmischung wird nach Formel (VIII) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol

Unter Berücksichtigung der relativen Intensitäten wurde gemäß der folgenden Formel (VIII) für das polymer gebundene Carbonat ("lineares Carbonat" LC) in der Reaktionsmischung in mol% umgerechnet:

$$\mathrm{L}C = \frac{F(5{,}1-4{,}8) - F(4{,}5)}{\mathrm{F}(5{,}1-4{,}8) + \mathrm{F}(2{,}4) + 0{,}33 * \mathrm{F}(1{,}2-1{,}0)} * 100 \qquad \text{(VIII)}$$

Der Gewichtsanteil (in Gew.-%) polymer-gebundenen Carbonats (LC') in der Reaktionsmischung wurde nach Formel (IX) berechnet,

$$LC' = \frac{[F(5{,}1-4{,}8) - F(4{,}5)] * 102}{N} * 100\% \qquad \text{(IX)}$$

wobei sich der Wert für N ("Nenner" N) nach Formel (X) berechnet:

$$\mathrm{N} = [\mathrm{F}(5{,}1-4{,}8) - \mathrm{F}(4{,}5)] * 102 + \mathrm{F}(4{,}5) * 102 + \mathrm{F}(2{,}4) * 58 + 0{,}33 * \mathrm{F}(1{,}2-1{,}0) * 58 \qquad \text{(X)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid.
Der Gewichtsanteil (in Gew.-%) an cyclischem Carbonat (CC') in der Reaktionsmischung wurde nach Formel (XI) berechnet,

$$CC' = \frac{F(4{,}5) * 102}{N} * 100\% \qquad \text{(XI)}$$

wobei sich der Wert für N nach Formel (X) berechnet.

Um aus den Werten der Zusammensetzung der Reaktionsmischung die Zusammensetzung bezogen auf den Polymer-Anteil (bestehend aus Polyether, welcher aus Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf das Polyethercarbonatpolyol-Molekül, das bei der Copolymerisation und den Aktivierungsschritten entstanden ist.

Die Menge an gebildeten Propylencarbonat wird über die Bilanzierung der in der Reaktionsmischung vorhandenen Gesamtmenge an Propylencarbonat und der gegebenenfalls als Vorlage eingesetzten Menge an Propylencarbonat bestimmt.

**Beispiel 1:**

Herstellung der Katalysator-Startermischung 1: 14,5 g DMC-Katalysator wurden in 1000 g einer Startermischung aus Monopropylenglykol/Glycerin im Gewichtsverhältnis Monopropylenglykol/Glycerin von 15/85, wobei die Startermischung 180 ppm $H_3PO_4$ enthält, suspendiert.

In einen mit Stickstoff gespülten 60L Druckreaktor mit Gasdosierungseinrichtung (Gaseinleitungsrohr) und Produktaustragsrohr wurden eine Suspension aus 14,9 g DMC-Katalysator (hergestellt gemäß WO 01/80994 A1, dortiges Beispiel 6) sowie 4700 g cyclisches Propylencarbonat (cPC) vorgelegt. Der Reaktor wurde auf ca. 100 °C aufgeheizt und 1 h bei einem Druck $p_{abs}$ = 100 mbar mit $N_2$ inertisiert. Anschließend wurde der Reaktor mit $CO_2$ auf einen Druck von 74 bar eingestellt. In den Reaktor wurden bei 110 °C, unter Rühren (316 U/min) 500 g Propylenoxid (PO) innerhalb von 2 min eindosiert. Das Anspringen der Reaktion machte sich durch eine Temperaturspitze ("Hotspot") und eine Druckabnahme bemerkbar. Nach der erfolgten Aktivierung wurden Propylenoxid mit 6,6 kg/h und Katalysator-Startermischung 1 mit 0,22 kg/h gleichzeitig in den Reaktor eindosiert. Dabei wurde die Reaktionstemperatur auf 105 °C gesenkt und die Reaktionsmischung über das Produktaustragsrohr aus dem Reaktor entnommen, wobei der Füllstand konstant bei einem Reaktionsvolumen Vr von 27,4 $dm^3$ gehalten wird. Zur Vervollständigung der Reaktion wurde die Reaktionsmischung über einem temperierten Rohrreaktor (T = 105°C; Reaktionsvolumen Vr 10,4 $dm^3$) gefördert. Die Abtrennung des cyclischen Propylencarbonats vom Polyethercarbonatpolyol erfolgte in einem Dünnschichtverdampfer (T = 140 °C, $p_{abs}$ < 3 mbar, 400 U/min).
In der nachfolgenden Tabelle 1 sind angegeben:

- der im stationären Zustand resultierende freie PO-Anteil in der Reaktionsmischung während der Copolymerisation,
- die Selektivität, d.h. das Verhältnis an cyclischem zu linearem Carbonat gebildet während der Copolymerisation sowie
- analytische Daten zum resultierenden Polyethercarbonatpolyol (Gehalt an eingebautem $CO_2$, die Polydispersität und die Hydroxylzahl (OHZ).

**Beispiel 2:**

Herstellung der Katalysator-Startermischung 2: 7,0 g DMC-Katalysator wurden in 1000 g Monopropylenglykol suspendiert.

In einen mit Stickstoff gespülten 60L Druckreaktor mit Gasdosierungseinrichtung (Gaseinleitungsrohr) und Produktaustragsrohr wurden eine Suspension aus 14,9 g DMC-Katalysator (hergestellt gemäß WO 01/80994 A1, dortiges Beispiel 6) sowie 4700 g cyclisches Propylencarbonat (cPC) vorgelegt. Der Reaktor wurde auf ca. 100 °C aufgeheizt und 1 h bei einem Druck $p_{abs}$ = 100 mbar mit $N_2$ inertisiert. Anschließend wurde der Reaktor mit $CO_2$ auf einen Druck von 74 bar eingestellt. In den Reaktor wurden bei 110 °C, unter Rühren (316 U/min) 500 g Propylenoxid (PO) innerhalb von 2 min eindosiert. Das Anspringen der Reaktion machte sich durch eine Temperaturspitze ("Hotspot") und eine Druckabnahme bemerkbar. Nach der erfolgten Aktivierung wurden Propylenoxid mit 6,58 kg/h und Katalysator-Startermischung 2 mit 0,31 kg/h gleichzeitig in den Reaktor eindosiert. Dabei wurde die Reaktionstemperatur auf 105 °C gesenkt und die Reaktionsmischung über das Produktaustragsrohr aus dem Reaktor entnommen, wobei der Füllstand konstant bei einem Reaktionsvolumen Vr von 27,4 $dm^3$ gehalten wird. Zur Vervollständigung der Reaktion wurde die Reaktionsmischung über einem temperierten Rohrreaktor (T = 105°C; Reaktionsvolumen Vr 10,4 $dm^3$) gefördert. Die Abtrennung des cyclischen Propylencarbonats vom Polyethercarbonatpolyol erfolgte in einem Dünnschichtverdampfer (T = 140 °C, $p_{abs}$ < 3 mbar, 400 U/min).
In der nachfolgenden Tabelle 1 sind angegeben:

- der im stationären Zustand resultierende freie PO-Anteil in der Reaktionsmischung während der Copolymerisation,
- die Selektivität, d.h. das Verhältnis an cyclischem zu linearem Carbonat gebildet während der Copolymerisation sowie
- analytische Daten zum resultierenden Polyethercarbonatpolyol (Gehalt an eingebautem $CO_2$, die Polydispersität und die Hydroxylzahl (OHZ).

**Vergleichsbeispiel 3:**

In einen mit Stickstoff gespülten 60L Druckreaktor mit Gasdosierungseinrichtung (Gaseinleitungsrohr) wurden eine mit Suspension aus 14,9 g DMC-Katalysator (hergestellt gemäß WO 01/80994 A1, dortiges Beispiel 6) sowie 4700 g cyclisches Propylencarbonat (cPC) vorgelegt. Der Reaktor wurde auf ca. 100 °C aufgeheizt und 1 h bei einem Druck $p_{abs}$ = 100 mbar mit $N_2$ inertisiert. Anschließend wurde der Reaktor mit $CO_2$ auf einen Druck von 74 bar eingestellt. In den Reaktor wurden bei 110 °C, unter Rühren (316 U/min) 500 g Propylenoxid (PO) innerhalb von 2 min eindosiert. Das

Anspringen der Reaktion machte sich durch eine Temperaturspitze ("Hotspot") und eine Druckabnahme bemerkbar. Nach der erfolgten Aktivierung wurden 33,58 kg Propylenoxid mit 8,2 kg/h sowie 1,1 kg einer Mischung aus Monopropylenglykol/Glycerin im Gewichtsverhältnis von 15/85 (wobei die Mischung mit 180 ppm $H_3PO_4$ versetzt wurde) mit 0,29 kg/h gleichzeitig in den Reaktor bei 105 °C eindosiert. Durch kontinuierliche geregelte Nachdosierung von $CO_2$ wurde der Druck im Reaktor konstant bei 74 bar gehalten. Nach beendeter PO-Zugabe wurde bei 105 °C und Reaktionsdruck bis zum Versiegen des $CO_2$-Verbrauchs mit 316 U/min gerührt. Die Abtrennung des cyclischen Propylencarbonats vom Polyethercarbonatpolyol erfolgte über einem Dünnschichtverdampfer (T = 140 °C, p < 3 mbar, 400 U/min). Der während der Reaktion sich einstellende freie PO-Anteil im Reaktor war nahezu konstant.

In der nachfolgenden Tabelle 1 sind angegeben:

- der resultierende freie PO-Anteil in der Reaktionsmischung während der Copolymerisation,
- die Selektivität, d.h. das Verhältnis an cyclischem zu linearem Carbonat gebildet während der Copolymerisation sowie
- analytische Daten zum resultierenden Polyethercarbonatpolyol (Gehalt an eingebautem $CO_2$, die Polydispersität und die Hydroxylzahl (OHZ).

**Vergleichsbeispiel 4:**

In einen mit Stickstoff gespülten 60L Druckreaktor mit Gasdosierungseinrichtung (Gaseinleitungsrohr) wurden eine mit Suspension aus 14,25 g DMC-Katalysator (hergestellt gemäß WO 01/80994 A1, dortiges Beispiel 6) sowie 4700 g cyclisches Propylencarbonat (cPC) vorgelegt. Der Reaktor wurde auf ca. 100 °C aufgeheizt und 1 h bei einem Druck $p_{abs}$ = 100 mbar mit $N_2$ inertisiert. Anschließend wurde der Reaktor mit $CO_2$ auf einen Druck von 74 bar eingestellt. In den Reaktor wurden bei 110 °C, unter Rühren (316 U/min) 560 g Propylenoxid (PO) innerhalb von 2 min eindosiert. Das Anspringen der Reaktion machte sich durch eine Temperaturspitze ("Hotspot") und eine Druckabnahme bemerkbar. Nach der erfolgten Aktivierung wurden 31,90 kg Propylenoxid mit 7,6 kg/h sowie 1,5 kg des Starters Monopropylenglykol mit 0,40 kg/h gleichzeitig in den Reaktor bei 105 °C eindosiert. Durch kontinuierliche geregelte Nachdosierung von $CO_2$ wurde der Druck im Reaktor konstant bei 74 bar gehalten. Nach beendeter PO-Zugabe wurde bei 105 °C und Reaktionsdruck bis zum Versiegen des $CO_2$-Verbrauchs mit 316 U/min gerührt. Die Abtrennung des cyclischen Propylencarbonats vom Polyethercarbonatpolyol erfolgte über einem Dünnschichtverdampfer (T = 140 °C, p < 3 mbar, 400 U/min). Der während der Reaktion sich einstellende freie PO-Anteil im Reaktor war nahezu konstant.

In der nachfolgenden Tabelle 1 sind angegeben:

- der resultierende freie PO-Anteil in der Reaktionsmischung während der Copolymerisation,
- die Selektivität, d.h. das Verhältnis an cyclischem zu linearem Carbonat gebildet während der Copolymerisation sowie
- analytische Daten zum resultierenden Polyethercarbonatpolyol (Gehalt an eingebautem $CO_2$, die Polydispersität (PDI) und die Hydroxylzahl (OHZ).

**Vergleichsbeispiel 5:**

Herstellung der Katalysator-Startermischung 3: 85,9 g DMC-Katalysator wurden in 5000 g einer Startermischung aus Monopropylenglykol/Glycerin im Gewichtsverhältnis Monopropylenglykol/Glycerin von 15/85, wobei die Startermischung 130 ppm $H_3PO_4$ enthält, suspendiert.

In einen mit Stickstoff gespülten 60L Druckreaktor mit Gasdosierungseinrichtung (Gaseinleitungsrohr) und Produktaustragsrohr wurden eine Suspension aus 2,5 g DMC-Katalysator (hergestellt gemäß WO 01/80994 A1, dortiges Beispiel 6) sowie 4700 g cyclisches Propylencarbonat (cPC) vorgelegt. Der Reaktor wurde auf ca. 100 °C aufgeheizt und 1 h bei einem Druck $p_{abs}$ = 100 mbar mit $N_2$ inertisiert. Anschließend wurde der Reaktor mit $CO_2$ auf einen Druck von 74 bar eingestellt. In den Reaktor wurden bei 115 °C, unter Rühren (316 U/min) 500 g Propylenoxid (PO) innerhalb von 2 min eindosiert. Das Anspringen der Reaktion machte sich durch eine Temperaturspitze ("Hotspot") und eine Druckabnahme bemerkbar. Nach der erfolgten Aktivierung wurde die Reaktionsmischung auf eine Temperatur von 105°C eingestellt und es wurden Propylenoxid mit 7,06 kg/h und Katalysator-Startermischung 3 mit 0,254 kg/h gleichzeitig in den Reaktor eindosiert. Dabei wurde die Reaktionsmischung über das Produktaustragsrohr aus dem Reaktor kontinuierlich entnommen, wobei der Füllstand konstant bei einem Reaktionsvolumen Vr von 27,4 $dm^3$ gehalten wird. Zur Vervollständigung der Reaktion wurde die Reaktionsmischung über einem temperierten Rohrreaktor (T = 120°C; Reaktionsvolumen Vr 10,4 $dm^3$) gefördert. Die Abtrennung des cyclischen Propylencarbonats vom Polyethercarbonatpolyol erfolgte in einem Dünnschichtverdampfer (T = 160 °C, $p_{abs}$ < 3 mbar, 400 U/min).
In der nachfolgenden Tabelle 1 sind angegeben:

- der im stationären Zustand resultierende freie PO-Anteil in der Reaktionsmischung während der Copolymerisation,
- die Selektivität, d.h. das Verhältnis an cyclischem zu linearem Carbonat gebildet während der Copolymerisation sowie
- analytische Daten zum resultierenden Polyethercarbonatpolyol (Gehalt an eingebautem $CO_2$, die Polydispersität und die Hydroxylzahl (OHZ).

**Vergleichsbeispiel 6:**

Herstellung der Katalysator-Startermischung 4: 17,2 g DMC-Katalysator wurden in 5000 g einer Startermischung aus Monopropylenglykol/Glycerin im Gewichtsverhältnis Monopropylenglykol/Glycerin von 15/85, wobei die Startermischung 130 ppm $H_3PO_4$ enthält, suspendiert.

In einen mit Stickstoff gespülten 60L Druckreaktor mit Gasdosierungseinrichtung (Gaseinleitungsrohr) und Produktaustragsrohr wurden eine Suspension aus 0,5 g DMC-Katalysator (hergestellt gemäß WO 01/80994 A1, dortiges Beispiel 6) sowie 4700 g cyclisches Propylencarbonat (cPC) vorgelegt. Der Reaktor wurde auf ca. 100 °C aufgeheizt und 1 h bei einem Druck $p_{abs}$ = 100 mbar mit $N_2$ inertisiert. Anschließend wurde der Reaktor mit $CO_2$ auf einen Druck von 74 bar eingestellt. In den Reaktor wurden bei 115 °C, unter Rühren (316 U/min) 500 g Propylenoxid (PO) innerhalb von 2 min eindosiert. Das Anspringen der Reaktion machte sich durch eine Temperaturspitze ("Hotspot") und eine Druckabnahme bemerkbar. Nach der erfolgten Aktivierung wurde die Reaktionsmischung auf eine Temperatur von 105°C eingestellt und es wurden Propylenoxid mit 7,06 kg/h und Katalysator-Startermischung 4 mit 0,254 kg/h gleichzeitig in den Reaktor eindosiert. Dabei wurde die Reaktionsmischung über das Produktaustragsrohr aus dem Reaktor kontinuierlich entnommen, wobei der Füllstand konstant bei einem Reaktionsvolumen Vr von 27,4 $dm^3$ gehalten wird. Der freie PO-Anteil in der Reaktionsmischung stieg während der kontinuierlichen Dosierung der Edukte stetig an. Ab einem freien PO-Anteil von 5,5 Gew.-% war aufgrund starker Druck- und Temperaturschwankungen keine stabile Prozessführung mehr möglich. Der Versuch musste daher abgebrochen werden.

**Beispiel 7:**

Herstellung der Katalysator-Startermischung 5: 34,5 g DMC-Katalysator wurden in 5000 g einer Startermischung aus Monopropylenglykol/Glycerin im Gewichtsverhältnis Monopropylenglykol/Glycerin von 15/85, wobei die Startermischung 130 ppm $H_3PO_4$ enthält, suspendiert.

In einen mit Stickstoff gespülten 60L Druckreaktor mit Gasdosierungseinrichtung (Gaseinleitungsrohr) und Produktaustragsrohr wurden eine Suspension aus 1,0 g DMC-Katalysator (hergestellt gemäß WO 01/80994 A1, dortiges Beispiel 6) sowie 4700 g cyclisches Propylencarbonat (cPC) vorgelegt. Der Reaktor wurde auf ca. 100 °C aufgeheizt und 1 h bei einem Druck $p_{abs}$ = 100 mbar mit $N_2$ inertisiert. Anschließend wurde der Reaktor mit $CO_2$ auf einen Druck von 74 bar eingestellt. In den Reaktor wurden bei 115 °C, unter Rühren (316 U/min) 500 g Propylenoxid (PO) innerhalb von 2 min eindosiert. Das Anspringen der Reaktion machte sich durch eine Temperaturspitze ("Hotspot") und eine Druckabnahme bemerkbar. Nach der erfolgten Aktivierung wurde die Reaktionsmischung auf eine Temperatur von 105°C eingestellt und es wurden Propylenoxid mit 7,06 kg/h und Katalysator-Startermischung 5 mit 0,254 kg/h gleichzeitig in den Reaktor eindosiert. Dabei wurde die Reaktionsmischung über das Produktaustragsrohr kontinuierlich aus dem Reaktor entnommen, wobei der Füllstand konstant bei einem Reaktionsvolumen Vr von 27,4 $dm^3$ gehalten wird. Zur Vervollständigung der Reaktion wurde die Reaktionsmischung über einem temperierten Rohrreaktor (T = 120°C; Reaktionsvolumen Vr 10,4 $dm^3$) gefördert. Die Abtrennung des cyclischen Propylencarbonats vom Polyethercarbonatpolyol erfolgte in einem Dünnschichtverdampfer (T = 160 °C, $p_{abs}$ < 3 mbar, 400 U/min).
In der nachfolgenden Tabelle 1 sind angegeben:

- der im stationären Zustand resultierende freie PO-Anteil in der Reaktionsmischung während der Copolymerisation,
- die Selektivität, d.h. das Verhältnis an cyclischem zu linearem Carbonat gebildet während der Copolymerisation sowie
- analytische Daten zum resultierenden Polyethercarbonatpolyol (Gehalt an eingebautem $CO_2$, die Polydispersität und die Hydroxylzahl (OHZ).

**Tabelle 1: Resultate der Polyethercarbonatpolyol-Herstellung**

| Beispiel | freier PO-Anteil [Gew.-%] | Eingebautes $CO_2$[Gew.-%] | Selektivität cyclisch / linear | PDI | OHZ [mg KOH/g] |
|---|---|---|---|---|---|
| **1** | 2,0 | 21,93 | 0,19 | 1,12 | 49,6 |

(fortgesetzt)

| Beispiel | freier PO-Anteil [Gew.-%] | Eingebautes $CO_2$[Gew.-%] | Selektivität cyclisch / linear | PDI | OHZ [mg KOH/g] |
|---|---|---|---|---|---|
| **2** | 2,7 | 21,63 | 0,11 | 1,10 | 54,5 |
| **3***) | 2,0 | 20,40 | 0,18 | 1,11 | 52,0 |
| **4***) | 2,5 | 18,83 | 0,11 | 1,12 | 55,3 |
| **5***) | 1,1 | 19,7 | 0,44 | 1,09 | 56,5 |
| **6***) | 5,5 | - | - | - | - |
| **7** | 3,1 | 20,5 | 0,17 | 1,09 | 55,9 |
| *) Vergleichsbeispiel | | | | | |

Aus den in Tabelle 1 dargestellten Ergebnissen ist ersichtlich, dass gemäß dem erfindungsgemäßen Verfahren ("CAOS-conti-Verfahren"), welches sich vom Stand der Technik dadurch unterscheidet, dass auch DMC-Katalysator kontinuierlich zudosiert wird, und der Gehalt an freiem Alkylenoxid während der Copolymerisation im erfindungsgemäßen Bereich gehalten wird, der Gehalt an eingebautem $CO_2$ im resultierenden Polyethercarbonatpolyol gegenüber dem Verfahren aus dem Stand der Technik ("CAOS-semibatch-Verfahren") (Vergleich des Beispiels 1 mit Vergleichsbeispiel 3 bzw. Beispiel 2 mit Vergleichsbeispiel 4 deutlich erhöht ist; der erhöhte Einbau von $CO_2$ macht sich auch darin bemerkbar, dass eine höhere mittlere Molmasse des resultierenden Polyethercarbonatpolyols erreicht wird und damit die resultierende Hydroxylzahl bei den entsprechenden erfindungsgemäßen Beispielen (1 bzw. 2) gegenüber den Vergleichsbeispielen (3 bzw. 4) jeweils niedriger ist.
Ein Vergleich von Beispiel 7 mit dem Vergleichsbeispiel 5 zeigt, dass bei Durchführung des CAOS-conti-Verfahrens im erfindungsgemäßen Bereich der freien Alkylenoxidkonzentration ein erhöhter Einbau von $CO_2$ und eine deutlich günstigere Selektivität (d.h. niedrigeres Verhältnis von cyclischem zu linearem Carbonat) erhalten wird als bei Durchführung des Verfahrens unterhalb des erfindungsgemäßen Bereichs der freien Alkylenoxidkonzentration. Vergleichsbeispiel 6 zeigt, dass oberhalb des erfindungsgemäßen Bereichs der freien Alkylenoxidkonzentration aufgrund starker Temperatur- und Druckschwankungen keine stabile Prozessführung mehr möglich ist.

**Patentansprüche**

1. Verfahren zur Herstellung von Polyethercarbonatpolyolen durch Anlagerung von Alkylenoxiden und Kohlendioxid an eine oder mehrere H-funktionelle Startersubstanzen in Gegenwart eines Doppelmetallcyanid (DMC)-Katalysators, **dadurch gekennzeichnet, dass**
(γ) eine oder mehrere H-funktionelle Startersubstanzen sowie DMC-Katalysator während der Anlagerung kontinuierlich in den Reaktor zudosiert werden, und die freie Alkylenoxidkonzentration in der Reaktionsmischung von 1,5 bis 5,0 Gew.-% beträgt, und das resultierende Reaktionsgemisch kontinuierlich aus dem Reaktor abgeführt wird.

2. Verfahren gemäß Anspruch 1, wobei in Schritt (γ) die freie Alkylenoxidkonzentration während der Anlagerung von 1,5 bis 4,5 Gew.-% beträgt.

3. Verfahren gemäß Anspruch 1, wobei in Schritt (γ) die freie Alkylenoxidkonzentration während der Anlagerung von 2,0 bis 4,0 Gew.-% beträgt.

4. Verfahren gemäß einem der Ansprüche 1 bis 3, wobei die in Schritt (γ) eingesetzten H-funktionellen Startersubstanzen mindestens 1000 ppm Komponente K enthalten, wobei Komponente K ausgewählt ist aus mindestens einer Verbindung, die eine Phosphor-Sauerstoff-Bindung enthält, oder einer Verbindung des Phosphors, die durch Reaktion mit OH-funktionellen Verbindungen eine oder mehrere P-O-Bindung(en) ausbilden kann.

5. Verfahren gemäß Anspruch 4, wobei die in Schritt (γ) eingesetzten H-funktionellen Startersubstanzen von 1000 ppm bis 10000 ppm Komponente K enthalten.

6. Verfahren gemäß Anspruch 4 oder 5, wobei Komponente K ausgewählt ist aus mindestens einer Verbindung aus der Gruppe bestehend aus Phosphorsäure, Phosphonsäure, Phosphorige Säure, Phosphinsäure, Phosphonigsäure, Phosphinigsäure, Phosphinoxide sowie Salze, Ester, Halogenide und Amide der Phosphorsäure, Phosphonsäure, Phosphorigen Säure, Phosphinsäure, Phosphonigsäure, Phosphinigsäure, Phosphor-(V)-sulfid, Phosphortribromid, Phosphortrichlorid und Phosphortriiodid.

**7.** Verfahren gemäß Anspruch 4 oder 5, wobei Komponente K ausgewählt ist aus mindestens einer Verbindung aus der Gruppe bestehend aus
Phosphorsäure,
Mono-, Di- oder Trialkylester der Phosphorsäure,
Mono-, Di- oder Triarylester der Phosphorsäure,
Mono-, Di- oder Trialkarylester der Phosphorsäure,
$(NH_4)_2HPO_4$,
Phosphonsäure,
Mono-, oder Dialkylester der Phosphonsäure,
Mono-, oder Diarylester der Phosphonsäure,
Mono-, oder Dialkarylester der Phosphonsäure,
Phosphorige Säure,
Mono-, Di- oder Trialkylester der Phosphorigen Säure,
Mono-, Di- oder Triarylester der Phosphorigen Säure,
Mono-, Di- oder Trialkarylester der Phosphorigen Säure,
Phosphinsäure,
Phosphonigsäure und
Phosphinigsäure.

**8.** Verfahren gemäß Anspruch 4 oder 5, wobei Komponente K Phosphorsäure ist.

**9.** Verfahren gemäß einem der Ansprüche 1 bis 8, wobei vor dem Schritt (γ) in einem Schritt (α) eine Teilmenge der H-funktionellen Startersubstanzen und/oder ein Suspensionsmittel, das keine H-funktionellen Gruppen enthält, in einem Reaktor jeweils gegebenenfalls gemeinsam mit DMC-Katalysator vorgelegt wird.

**10.** Verfahren gemäß Anspruch 9, wobei in Schritt (α) mindestens ein Suspensionsmittel eingesetzt wird ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Tetrachlorkohlenstoff, ε-Caprolacton, Dihydrocumarin, Trimethylencarbonat, Neopentylglykolcarbonat, 3,6-Dimethyl-1,4-dioxane-2,5-dion, Succinsäure¬anhydrid, Maleinsäureanhydrid und Phthalsäureanhydrid.

**11.** Verfahren gemäß Anspruch 9 oder 10, wobei anschließend an Schritt (α) und vor dem Schritt (γ)
(β) zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird.

**12.** Verfahren gemäß einem der Ansprüche 1 bis 11, wobei
(δ) das in Schritt (γ) kontinuierlich entfernte Reaktionsgemisch in einen Nachreaktor überführt wird, in dem im Wege einer Nachreaktion der Gehalt an freiem Alkylenoxid auf weniger als 0,05 Gew.-% im Reaktionsgemisch reduziert wird.

**13.** Verfahren gemäß einem der Ansprüche 1 bis 12, wobei die eine oder mehrere H-funktionelle Startersubstanzen ausgewählt sind aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mn im Bereich von 150 bis 8000 g/mol bei einer Funktionalität von 2 bis 3 und Polyetherpolyole mit einem Molekulargewicht Mn im Bereich von 150 bis 8000 g/mol bei einer Funktionalität von 2 bis 3.

**14.** Verfahren gemäß einem der Ansprüche 1 bis 13, wobei in Schritt (γ) die eine oder mehrere H-funktionelle Startersubstanzen ausgewählt sind aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan und Pentaerythrit.

**15.** Verfahren zur Herstellung von Polyethercarbonatpolyolen durch Anlagerung von Alkylenoxiden und Kohlendioxid an eine oder mehrere H-funktionelle Startersubstanzen in Gegenwart eines Metallkomplexkatalysator auf Basis der Metalle Zink und/oder Cobalt, **dadurch gekennzeichnet, dass**
(γ) eine oder mehrere H-funktionelle Startersubstanzen sowie Metallkomplexkatalysator auf Basis der Metalle Zink und/oder Cobalt während der Anlagerung kontinuierlich in den Reaktor zudosiert werden, und die freie Alkylenoxidkonzentration in der Reaktionsmischung von 1,5 bis 5,0 Gew.-% beträgt, und das resultierende Reaktionsgemisch kontinuierlich aus dem Reaktor abgeführt wird.

## Claims

**1.** Process for preparing polyether carbonate polyols by adding alkylene oxides and carbon dioxide onto one or more H-functional starter substances in the presence of a double metal cyanide (DMC) catalyst, **characterized in that**
(γ) one or more H-functional starter substances and DMC catalyst are metered continuously into the reactor during the addition, and the free alkylene oxide concentration in the reaction mixture is from 1.5% to 5.0% by weight, and the resulting reaction mixture is removed continuously from the reactor.

**2.** Process according to Claim 1, wherein the free alkylene oxide concentration during the addition in step (γ) is from 1.5% to 4.5% by weight.

**3.** Process according to Claim 1, wherein the free alkylene oxide concentration during the addition in step (γ) is from 2.0% to 4.0% by weight.

**4.** Process according to any of Claims 1 to 3, wherein the H-functional starter substances used in step (γ) contain at least 1000 ppm of component K, where component K is selected from at least one compound containing a phosphorus-oxygen bond and a compound of phosphorus which can form one or more P-O bond(s) by reaction with OH-functional compounds.

**5.** Process according to Claim 4, wherein the H-functional starter substances used in step (γ) contain from 1000 ppm to 10 000 ppm of component K.

**6.** Process according to Claim 4 or 5, wherein component K is selected from at least one compound from the group consisting of phosphoric acid, phosphonic acid, phosphorous acid, phosphinic acid, phosphonous acid, phosphinous acid, phosphine oxides,
and salts, esters, halides and amides of phosphoric acid, phosphonic acid, phosphorous acid, phosphinic acid, phosphonous acid, phosphinous acid, phosphorus(V) sulfide, phosphorus tribromide, phosphorus trichloride and phosphorus triiodide.

**7.** Process according to Claim 4 or 5, wherein component K is selected from at least one compound from the group consisting of
phosphoric acid,
mono-, di- or trialkyl esters of phosphoric acid, mono-, di- or triaryl esters of phosphoric acid, mono-, di- or trialkaryl esters of phosphoric acid, $(NH_4)_2HPO_4$,
phosphonic acid,
mono- or dialkyl esters of phosphonic acid,
mono- or diaryl esters of phosphonic acid,
mono- or dialkaryl esters of phosphonic acid, phosphorous acid,
mono-, di- or trialkyl esters of phosphorous acid, mono-, di- or triaryl esters of phosphorous acid, mono-, di- or trialkaryl esters of phosphorous acid,
phosphinic acid,
phosphonous acid and
phosphinous acid.

**8.** Process according to Claim 4 or 5, wherein component K is phosphoric acid.

**9.** Process according to any of Claims 1 to 8, wherein step (γ) is preceded by initial charging, in a step (α), of a portion of the H-functional starter substances and/or a suspension medium containing no H-functional groups in a reactor, in each case optionally together with DMC catalyst.

10. Process according to Claim 9, wherein at least one suspension medium is used in step (α), selected from the group consisting of 4-methyl-2-oxo-1,3-dioxolane, 1,3-dioxolan-2-one, acetone, methyl ethyl ketone, acetonitrile, nitromethane, dimethyl sulfoxide, sulfolane, dimethylformamide, dimethylacetamide, N-methylpyrrolidone, dioxane, diethyl ether, methyl tert-butyl ether, tetrahydrofuran, ethyl acetate, butyl acetate, pentane, n-hexane, benzene, toluene, xylene, ethylbenzene, chloroform, chlorobenzene, dichlorobenzene, carbon tetrachloride, ε-caprolactone, dihydrocoumarin, trimethylene carbonate, neopentyl glycol carbonate, 3,6-dimethyl-1,4-dioxane-2,5-dione, succinic anhydride, maleic anhydride and phthalic anhydride.

11. Process according to Claim 9 or 10, wherein step (α) is followed and step (γ) is preceded by
(β) adding a portion of alkylene oxide to the mixture from step (α) at temperatures of 90 to 150°C, in which case the addition of the alkylene oxide compound is interrupted.

12. Process according to any of Claims 1 to 11, wherein
(δ) the reaction mixture continuously removed in step (γ) is transferred into a postreactor in which, by way of a postreaction, the content of free alkylene oxide is reduced to less than 0.05% by weight in the reaction mixture.

13. Process according to any of Claims 1 to 12, wherein the one or more H-functional starter substances are selected from at least one of the group consisting of ethylene glycol, propylene glycol, propane-1,3-diol, butane-1,3-diol, butane-1,4-diol, pentane-1,5-diol, 2-methylpropane-1,3-diol, neopentyl glycol, hexane-1,6-diol, octane-1,8-diol, diethylene glycol, dipropylene glycol, glycerol, trimethylolpropane, pentaerythritol, sorbitol, polyether carbonate polyols having a molecular weight Mn in the range from 150 to 8000 g/mol with a functionality of 2 to 3, and polyether polyols having a molecular weight Mn in the range from 150 to 8000 g/mol with a functionality of 2 to 3.

14. Process according to any of Claims 1 to 13, wherein, in step (γ), the one or more H-functional starter substances are selected from at least one of the group consisting of ethylene glycol, propylene glycol, propane-1,3-diol, butane-1,3-diol, butane-1,4-diol, pentane-1,5-diol, 2-methylpropane-1,3-diol, neopentyl glycol, hexane-1,6-diol, octane-1,8-diol, diethylene glycol, dipropylene glycol, glycerol, trimethylolpropane and pentaerythritol.

15. Process for preparing polyether carbonate polyols by adding alkylene oxides and carbon dioxide onto one or more H-functional starter substances in the presence of a metal complex catalyst based on the metals zinc and/or cobalt, **characterized in that**
(γ) one or more H-functional starter substances and metal complex catalyst based on the metals zinc and/or cobalt are metered continuously into the reactor during the addition, and the free alkylene oxide concentration in the reaction mixture is from 1.5% to 5.0% by weight, and the resulting reaction mixture is removed continuously from the reactor.

## Revendications

1. Procédé pour la préparation de polyéthercarbonatepolyols par addition d'oxydes d'alkylène et de dioxyde de carbone sur une ou plusieurs substances de départ à fonctionnalité H en présence d'un catalyseur de type cyanure métallique double (DMC), **caractérisé en ce que**
(γ) une ou plusieurs substances de départ à fonctionnalité H ainsi que le catalyseur DMC sont dosés en continu dans le réacteur pendant l'addition et la concentration en oxyde d'alkylène libre dans le mélange réactionnel est de 1,5 à 5,0% en poids et le mélange réactionnel résultant est éliminé en continu du réacteur.

2. Procédé selon la revendication 1, dans lequel la concentration en oxyde d'alkylène libre dans l'étape (γ) pendant l'addition est de 1,5 à 4,5% en poids.

3. Procédé selon la revendication 1, dans lequel la concentration en oxyde d'alkylène libre dans l'étape (γ) pendant l'addition est de 2,0 à 4,0% en poids.

4. Procédé selon l'une quelconque des revendications 1 à 3, dans lequel les substances de départ à fonctionnalité H utilisées dans l'étape (γ) contiennent au moins 1000 ppm de composant K, le composant K étant choisi parmi au moins un composé qui contient une liaison phosphore-oxygène ou un composé du phosphore qui peut former une ou plusieurs liaisons P-O par réaction avec des composés à fonctionnalité OH.

5. Procédé selon la revendication 4, dans lequel les substances de départ à fonctionnalité H utilisées dans l'étape (γ) contiennent 1000 ppm à 10.000 ppm de composant K.

6. Procédé selon la revendication 4 ou 5, dans lequel le composant K est choisi parmi au moins un composé du groupe constitué par l'acide phosphorique, l'acide phosphonique, l'acide phosphoreux, l'acide phosphinique, l'acide phosphoneux, l'acide phosphineux, les oxydes de phosphine
ainsi que les sels, les esters, les halogénures et les amides de l'acide phosphorique, de l'acide phosphonique, de l'acide phosphoreux, de l'acide phosphinique, de l'acide phosphoneux, de l'acide phosphineux, le sulfure de phosphore (V), le tribromure de phosphore, le trichlorure de phosphore, le triiodure de phosphore.

7. Procédé selon la revendication 4 ou 5, dans lequel le composant K est choisi parmi au moins un composé du groupe constitué par
l'acide phosphorique,
les esters monoalkyliques, dialkyliques ou trialkyliques de l'acide phosphorique,
les esters monoaryliques, diaryliques ou triaryliques de l'acide phosphorique,
les esters monoalkaryliques, dialkaryliques ou trialkaryliques de l'acide phosphorique,
le $(NH_4)_2HPO_4$,
l'acide phosphonique,
les esters monoalkyliques, dialkyliques ou trialkyliques de l'acide phosphonique,
les esters monoaryliques, diaryliques ou triaryliques de l'acide phosphonique,
les esters monoalkaryliques, dialkaryliques ou trialkaryliques de l'acide phosphonique,
l'acide phosphoreux,
les esters monoalkyliques, dialkyliques ou trialkyliques de l'acide phosphoreux,
les esters monoaryliques, diaryliques ou triaryliques de l'acide phosphoreux,
les esters monoalkaryliques, dialkaryliques ou trialkaryliques de l'acide phosphoreux,
l'acide phosphinique,
l'acide phosphoneux et
l'acide phosphineux.

8. Procédé selon la revendication 4 ou 5, dans lequel le composant K est l'acide phosphorique.

9. Procédé selon l'une quelconque des revendications 1 à 8, dans lequel, avant l'étape (γ), dans une étape (α), on dispose au préalable une quantité partielle des substances de départ à fonctionnalité H et/ou un agent de mise en suspension, qui ne contient pas de groupes à fonctionnalité H, dans un réacteur, à chaque fois le cas échéant conjointement avec le catalyseur DMC.

10. Procédé selon la revendication 9, dans lequel, dans l'étape (α), on utilise au moins un agent de mise en suspension choisi dans le groupe constitué par le 4-méthyl-2-oxo-1,3-dioxolane, la 1,3-dioxolan-2-one, l'acétone, la méthyléthylcétone, l'acétonitrile, le nitrométhane, le diméthylsulfoxyde, le sulfolane, le diméthylformamide, le diméthylacétamide, la N-méthylpyrrolidone, le dioxane, le diéthyléther, le méthyl-tert-butyléther, le tétrahydrofuranne, l'ester éthylique de l'acide acétique, l'este butylique de l'acide acétique, le pentane, le n-hexane, le benzène, le toluène, le xylène, l'éthylbenzène, le chloroforme, le chlorobenzène, le dichlorobenzène, le tétrachlorure de carbone, l'ε-caprolactone, la dihydrocoumarine, le carbonate de triméthylène, le carbonate de néopentylglycol, la 3,6-diméthyl-1,4-dioxane-2,5-dione, l'anhydride de l'acide succinique, l'anhydride de l'acide maléique et l'anhydride de l'acide phtalique.

11. Procédé selon la revendication 9 ou 10, dans lequel, après l'étape (α) et avant l'étape (γ)
(β) on ajoute au mélange de l'étape (α) une quantité partielle d'oxyde d'alkylène à des températures de 90 à 150°C et l'addition du composé d'oxyde d'alkylène étant ensuite interrompue.

12. Procédé selon l'une quelconque des revendications 1 à 11, dans lequel
(δ) le mélange réactionnel éliminé en continu dans l'étape (γ) est transféré dans un post-réacteur dans lequel, dans le sens d'une post-réaction, la teneur en oxyde d'alkylène libre est réduite à moins de 0,05% en poids dans le mélange réactionnel.

13. Procédé selon l'une quelconque des revendications 1 à 12, dans lequel ladite une ou lesdites plusieurs substances de départ à fonctionnalité H sont choisies parmi au moins l'une du groupe constitué par l'éthylèneglycol, le propylèneglycol, le 1,3-propanediol, le 1,3-butanediol, le 1,4-butanediol, le 1,5-pentanediol, le 2-méthylpropane-1,3-diol, le néopentylglycol, le 1,6-hexanediol, le 1,8-octanediol, le diéthylèneglycol, le dipropylèneglycol, le glycérol, le triméthylolpropane, le pentaérythritol, le sorbitol, les polyéthercarbonatepolyols présentant un poids moléculaire Mn dans la plage de 150 à 8000 g/mole à une fonctionnalité de 2 à 3 et les polyétherpolyols présentant un poids

moléculaire Mn dans la plage de 150 à 8000 g/mole à une fonctionnalité de 2 à 3.

**14.** Procédé selon l'une quelconque des revendications 1 à 13, dans lequel, dans l'étape (γ), ladite une ou lesdites plusieurs substances de départ à fonctionnalité H sont choisies parmi au moins l'une du groupe constitué par l'éthylèneglycol, le propylèneglycol, le 1,3-propanediol, le 1,3-butanediol, le 1,4-butanediol, le 1,5-pentanediol, le 2-méthylpropane-1,3-diol, le néopentylglycol, le 1,6-hexanediol, le 1, 8-octanediol, le diéthylèneglycol, le dipropylèneglycol, le glycérol, le triméthylolpropane et le pentaérythritol.

**15.** Procédé pour la préparation de polyéthercarbonatepolyols par addition d'oxydes d'alkylène et de dioxyde de carbone sur une ou plusieurs substances de départ à fonctionnalité H en présence d'un catalyseur complexe métallique à base des métaux zinc et/ou cobalt, **caractérisé en ce que**
(y) une ou plusieurs substances de départ à fonctionnalité H ainsi que le catalyseur complexe métallique à base des métaux zinc et/ou cobalt sont dosés en continu dans le réacteur pendant l'addition et la concentration en oxyde d'alkylène libre dans le mélange réactionnel est de 1,5 à 5,0% en poids et le mélange réactionnel résultant est éliminé en continu du réacteur.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0222453 A
- WO 2008092767 A
- EP 2703426 A1
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- US 7304172 B2
- US 20120165549 A1
- WO 0180994 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **M. H. CHISHOLM et al.** *Macromolecules,* 2002, vol. 35, 6494
- **S. D. ALLEN.** *J. Am. Chem. Soc.,* 2002, vol. 124, 14284
- **M. R. KEMBER et al.** *Angew. Chem., Int. Ed.,* 2009, vol. 48, 931